# EUROPEAN PATENT APPLICATION

(11) **EP 3 121 536 A1**
(43) Date of publication of application: **25.01.2017**
(21) Application number: 14886486.1
(22) Date of filing: 17.03.2014
(51) Int. Cl.: F25B 1/00

(54) **COMPRESSOR AND REFRIGERATION CYCLE APPARATUS**

(71) Applicant: Mitsubishi Electric Corporation, Chiyoda-ku Tokyo 100-8310 (JP); Asahi Glass Company, Limited, Tokyo 100-8405 (JP)
(72) Inventor: YAMASHITA, Koji, Tokyo 100-8310 (JP)
(74) Representative: Pfenning, Meinig & Partner mbB
(86) International application number: PCT/JP2014/057040
(87) International publication number: WO 2015/140880

(57) **Abstract**

A compressor is configured to form a refrigerant circuit using refrigerant containing a substance having such a property as to cause a disproportionation reaction, and includes a shell 45 serving as an outer shell, a compression chamber 47 installed inside the shell 45, the compression chamber 47 being configured to compress the sucked refrigerant, cause the compressed refrigerant to flow into the shell 45 to place the shell 45 under a high-pressure refrigerant atmosphere, and discharge the compressed refrigerant externally, and a motor 44 configured to feed power to the compressor 47. With the configuration described above, a disproportionation reaction is made unlikely to occur. As a result, the substance having such a property as to cause a disproportionation reaction can be used safely as the refrigerant.

## Description

### Technical Field

The present invention relates to a compressor and the like to be used for a refrigeration cycle apparatus such as an air-conditioning apparatus to be applied to, for example, a multi-air-conditioning apparatus for a building.

### Background Art

In a refrigeration cycle apparatus configured to form a refrigerant circuit configured to circulate refrigerant therethrough so as to perform air-conditioning and other operations, like a multi-air-conditioning apparatus for a building, R410A that is incombustible, R32 having low combustibility, or a highly combustible substance containing hydrogen and carbon, such as propane, is used as the refrigerant. When being released into atmosphere, the above-mentioned substances are decomposed in the atmosphere to turn into different substances with different time lengths. In the refrigeration cycle apparatus, however, the above-mentioned substances have high stability and therefore can be used as the refrigerant for a period of time as long as to several tens of years.

In contrast, some of the substances each containing hydrogen and carbon are poor in stability even in a refrigeration cycle apparatus and hence are each hardly used as refrigerant. Those substances poor in stability are, for example, substances each having such a property as to cause a disproportionation reaction. The term "disproportionation" refers to the property by which substances of the same kind react with each other to change into another substance. For example, when certain strong energy is applied to refrigerant under a state in which a distance between adjacent substances is extremely small, such as a liquid state, the energy causes a disproportionation reaction and hence the adjacent substances react with each other to change into another substance. When the disproportionation reaction occurs, heat generation occurs to cause an abrupt increase in temperature and hence an abrupt increase in pressure may occur. For example, when a substance having such a property as to cause a disproportionation reaction is used as the refrigerant of a refrigeration cycle apparatus, and is enclosed in a pipe made of copper or the like, the pipe cannot completely withstand an increase in pressure of the refrigerant therein and hence an accident, such as pipe rupture, may occur. For example, 1,1,2-trifluoroethylene (HFO-1123) or acetylene has been known as the substance having such a property as to cause a disproportionation reaction.

In addition, there exists a heat cycle system (refrigeration cycle apparatus) using 1,1,2-trifluoroethylene (HFO-1123) as a working medium for a heat cycle (for example, Patent Literature 1).

### Citation List

### Patent Literature

Patent Literature 1: International Patent WO 12/157764A (page 3, page 12, Fig. 1, etc.)

### Summary of Invention

### Technical Problem

In the refrigeration cycle apparatus such as the thermal cycle system disclosed in Patent Literature 1, 1,1,2-trifluoroethylene (HFO-1123) is disclosed to be used as a working medium for a thermal cycle. Here, 1,1,2-trifluoroethylene (HFO-1123) is a substance having such a property as to cause a disproportionation reaction. When the substance having such a property as to cause a disproportionation reaction is used as the refrigerant as it is, adjacent refrigerant substances may react with each other due to some energy to turn into a different substance, failing to function as the refrigerant. In addition, there is a fear that an accident, e.g., pipe rupture may occur due to a sudden pressure rise. Therefore, there is a problem in that, for the use as the refrigerant, the substance having such a property as to cause a disproportionation reaction needs to be used so as not to cause the disproportionation reaction. Therefore, efforts to prevent occurrence of the disproportionation reaction are required. However, in Patent Literature 1, for example, there is no disclosure of a method for realizing an apparatus capable of preventing the occurrence of the disproportionation reaction and the like.

The present invention has been made to solve the problem described above, and provides a compressor having a structure in which a disproportionation reaction of refrigerant is unlikely to occur, and the like.

### Solution to Problem

According to one embodiment of the present invention, there is provided a compressor configured to form a refrigerant circuit using refrigerant containing a substance having such a property as to cause a disproportionation reaction, the compressor including: a hermetic container serving as an outer shell; a compression chamber installed inside the hermetic container, the compression chamber being configured to compress the refrigerant, which is sucked, cause the compressed refrigerant to flow into the hermetic container to place the hermetic container under a high-pressure refrigerant atmosphere, and discharge the compressed refrigerant externally; and a motor configured to feed power to the compression chamber. The compressor enables the substance having such a property as to cause a disproportionation reaction to be used safely as the refrigerant.

### Advantageous Effects of Invention

The compressor of one embodiment of the present invention is configured as a high-pressure shell-type compressor including a hermetic container to be filled with gas refrigerant. As a result, the disproportionation reaction due to the substance having such a property as to cause a disproportionation reaction, e.g., 1,1,2-trifluoroethylene (HFO-1123), is unlikely to occur in the compressor. Therefore, there can be provided the compressor capable of preventing the substance from being unusable as the refrigerant as a result of the disproportionation reaction, and of preventing occurrence of an accident, e.g., pipe rupture so that the substance can be safely used as the refrigerant.

### Brief Description of Drawings

[Fig. 1] Fig. 1 is a schematic view for illustrating an example of installation of a refrigeration cycle apparatus according to a first embodiment of the present invention.
[Fig. 2] Fig. 2 is a circuit configuration diagram of the refrigeration cycle apparatus according to the first embodiment of the present invention.
[Fig. 3] Fig. 3 is a circuit configuration diagram of the refrigeration cycle apparatus according to the first embodiment of the present invention during a cooling operation.
[Fig. 4] Fig. 4 is a circuit configuration diagram of the refrigeration cycle apparatus according to the first embodiment of the present invention during a heating operation.
[Fig. 5] Fig. 5 is a schematic view of a configuration of a compressor of the refrigeration cycle apparatus according to the first embodiment of the present invention.
[Fig. 6] Fig. 6 is an enlarged view of a compression unit of the compressor of the refrigeration cycle apparatus according to the first embodiment of the present invention.
[Fig. 7] Fig. 7 is a circuit configuration diagram of a refrigeration cycle apparatus according to a second embodiment of the present invention.

### Description of Embodiments

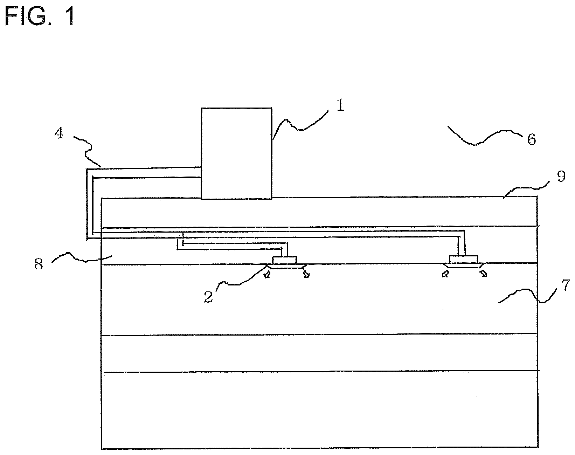

Now, a refrigeration cycle apparatus according to embodiments of the present invention is described referring to the drawings. In the drawings referred to below including Fig. 1, components denoted by the same reference symbols correspond to the same or equivalent components. This is common throughout the embodiments described below. Further, the forms of the components described herein are merely examples, and the components are not limited to the forms described herein. In particular, the combinations of the components are not limited to only the combinations in each embodiment, and the components described in another embodiment may be applied to still another embodiment. Further, unless otherwise necessary to be distinguished or specified, a plurality of devices of the same type or other components, which are distinguished from one another by suffixes or in another way, may be described without the suffixes. Further, the upper part and the lower part of the drawings are referred to as "upper side" and "lower side", respectively. Further, in the drawings, the size relationship between the components may be different from the actual size relationship. In addition, a high-and-low relationship or other relationships of temperature, pressure, or other factors are not determined in relation to particular absolute values, but are determined in a relative manner based on a state, an operation, or other factors of systems, devices, or other conditions.

### First Embodiment

A first embodiment of the present invention is described referring to the drawings. Fig. 1 is a schematic view for illustrating an example of installation of a refrigeration cycle apparatus according to the first embodiment of the present invention. The refrigeration cycle apparatus illustrated in Fig. 1 is configured to form a refrigerant circuit configured to circulate refrigerant therethrough to use a refrigeration cycle with the refrigerant, thereby being capable of selecting any one of a cooling mode and a heating mode as an operation mode. Here, an air-conditioning apparatus configured to air-condition a space to be air-conditioned (indoor space 7) is described as an example of the refrigeration cycle apparatus according to this embodiment.

In Fig. 1, the refrigeration cycle apparatus according to this embodiment includes one outdoor unit 1 serving as a heat source apparatus, and a plurality of indoor units 2. The outdoor unit 1 and the indoor units 2 are connected to each other by extension pipes (refrigerant pipes) 4 through which the refrigerant is conveyed. Cooling energy or heating energy generated by the outdoor unit 1 is delivered to the indoor units 2.

The outdoor unit 1 is generally arranged in an outdoor space 6, which is a space outside of a construction 9 such as a building (for example, on a rooftop), and is configured to supply the cooling energy or heating energy to the indoor units 2. The indoor units 2 are arranged at positions at which temperature-adjusted air can be supplied to an indoor space 7 being a space inside the construction 9 (for example, residential room), and are configured to supply cooling air or heating air to the indoor space 7 being a space to be air-conditioned.

As illustrated in Fig. 1, in the refrigeration cycle apparatus according to this embodiment, the outdoor unit 1 and each of the indoor units 2 are connected by the two extension pipes 4.

In Fig. 1, an example of a case where the indoor unit 2 is a ceiling cassette type indoor unit is illustrated, but the present invention is not limited thereto. Any types of the indoor unit such as a ceiling-concealed indoor unit or a ceiling-suspended indoor unit may be adopted as long as heating air or cooling air can be blown into the indoor space 7 directly or through a duct or other means.

In Fig. 1, an example of a case where the outdoor unit 1 is installed in the outdoor space 6 is illustrated, but the present invention is not limited thereto. For example, the outdoor unit 1 may be installed in an enclosed space such as a machine room with a ventilation port. Alternatively, the outdoor unit 1 may be installed inside the construction 9 as long as waste heat is exhaustible to the outside of the construction 9 through an exhaust duct. Further, when a water-cooled outdoor unit 1 is adopted, the outdoor unit 1 may be installed inside the construction 9. No particular problem may arise even if the outdoor unit 1 is installed at any place.

Further, the numbers of the outdoor units 1 and the indoor units 2 to be connected are not limited to the numbers as illustrated in Fig. 1, but may be determined depending on the construction 9 in which the refrigeration cycle apparatus according to this embodiment is installed.

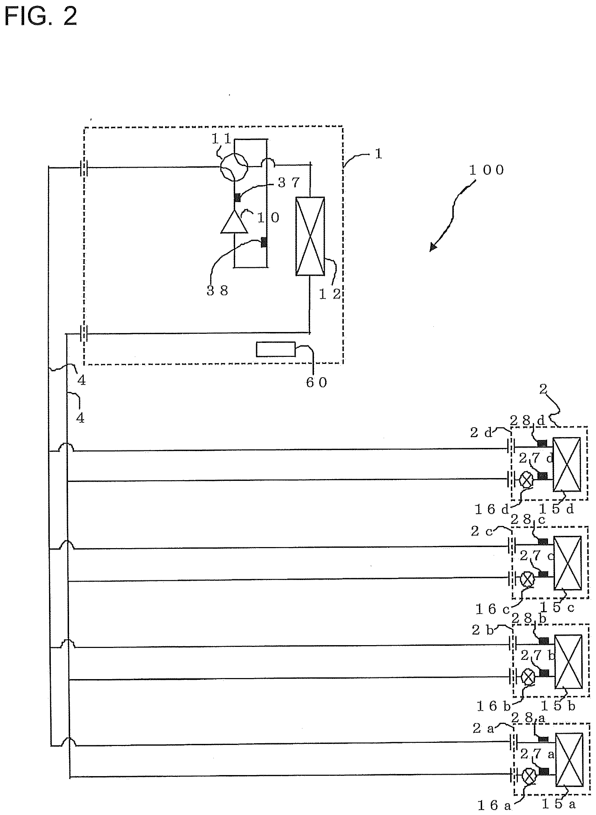

Fig. 2 is a circuit configuration diagram for illustrating an example of a circuit configuration of the refrigeration cycle apparatus according to the first embodiment (hereinafter referred to as "refrigeration cycle apparatus 100"). Referring to Fig. 2, a detailed configuration of the refrigeration cycle apparatus 100 is described. As illustrated in Fig. 2, the outdoor unit 1 and the indoor units 2 are connected to each other by the extension pipes (refrigerant pipes) 4 through which the refrigerant flows.

### [Outdoor Unit 1]

In the outdoor unit 1, a compressor 10, a refrigerant flow switching device 11 such as a four-way valve, and a heat source-side heat exchanger 12 are mounted in a serial connection by the refrigerant pipes.

The compressor 10 is configured to suck the refrigerant, and compress the refrigerant into a high-temperature and high-pressure state. For example, the compressor 10 may be a capacity-controllable inverter compressor or other components. The refrigerant flow switching device 11 is configured to switch a flow of the refrigerant during a heating operation and a flow of the refrigerant during a cooling operation. Detailed description of the compressor 10 is given later. The heat source-side heat exchanger 12 functions as an evaporator during the heating operation and functions as a condenser (or a radiator) during the cooling operation. Further, the heat source-side heat exchanger 12 serving as a first heat exchanger is configured to exchange heat between air supplied from a fan (not shown) and the refrigerant, thereby evaporating and gasifying the refrigerant or condensing and liquefying the refrigerant. The heat source-side heat exchanger 12 functions as a condenser during an operation of cooling the indoor space 7, and functions as an evaporator during an operation of heating the indoor space 7.

The outdoor unit 1 includes the compressor 10, the refrigerant flow switching device 11, the heat source-side heat exchanger 12, a high-pressure detection device 37, a low-pressure detection device 38, and a controller 60. As the compressor 10, for example, there is used a compressor having a high-pressure shell structure including a compression chamber defined inside a hermetic container placed under a high-refrigerant pressure atmosphere so as to discharge high-pressure refrigerant compressed in the compression chamber into the hermetic container. Further, the outdoor unit 1 includes the controller 60 configured to control the devices based on information detected by various detection devices, an instruction from a remote controller, and the like. For example, a driving frequency of the compressor 10, a rotation speed (including ON/OFF) of a fan, switching of the refrigerant flow switching device 11 are controlled to execute each of the operation modes described later. Here, the controller 60 according to this embodiment is, for example, a microcomputer including a control arithmetic processing unit such as a central processing unit (CPU). Further, the controller 60 includes a storage unit (not shown) having data containing, as programs, a processing procedure relating to the control and other operations. Then, the control arithmetic processing unit executes the processing based on the data of the program to realize the control.

### [Indoor Unit 2]

Each of the indoor units 2 includes a load-side heat exchanger 15 mounted therein, serving as a second heat exchanger. The load-side heat exchanger 15 is connected to the outdoor unit 1 by the extension pipes 4. The load-side heat exchanger 15 is configured to exchange heat between air supplied from a fan (not shown) and the refrigerant so that heating air or cooling air to be supplied to the indoor space 7 is generated. The load-side heat exchangers 15 function as condensers during the operation of heating the indoor space 7 and function as evaporators during the operation of cooling the indoor space 7.

In Fig. 2, an example of a case where four indoor units 2 are connected is illustrated, and the four indoor units are illustrated as an indoor unit 2a, an indoor unit 2b, an indoor unit 2c, and an indoor unit 2d, respectively, in the stated order from the bottom of the drawing sheet. Further, corresponding to the indoor units 2a to 2d, the respective load-side heat exchangers 15 are illustrated as a load-side heat exchanger 15a, a load-side heat exchanger 15b, a load-side heat exchanger 15c, and a load-side heat exchanger 15d in the stated order from the bottom of the drawing sheet as well. Similarly to Fig. 1, the number of the indoor units 2 to be connected is not limited to four as illustrated in Fig. 2.

Each of the operation modes to be executed by the refrigeration cycle apparatus 100 is described. The refrigeration cycle apparatus 100 is configured to determine the operation mode of the outdoor unit 1 as any one of a cooling operation mode and a heating operation mode based on an instruction from each indoor unit 2. That is, the refrigeration cycle apparatus 100 is capable of performing the same operation (cooling operation or heating operation) among all the indoor units 2 to adjust the indoor temperature. Running and idling of each indoor unit 2 may be switched freely in any of the cooling operation mode and the heating operation mode.

The operation modes to be executed by the refrigeration cycle apparatus 100 include the cooling operation mode in which all the running indoor units 2 execute the cooling operation (including idling), and the heating operation mode in which all the running indoor units 2 execute the heating operation (including idling). Now, each of the operation modes is described with the flows of the refrigerant.

### [Cooling Operation Mode]

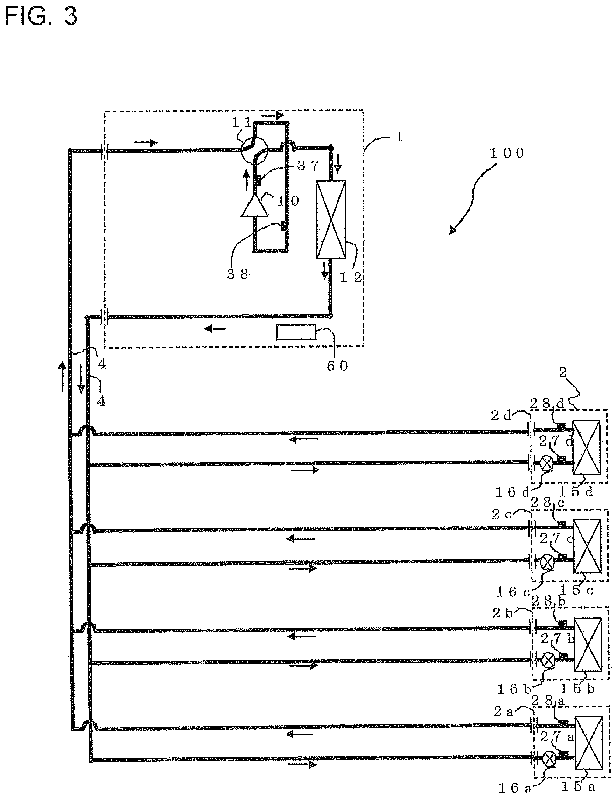

Fig. 3 is a refrigerant circuit diagram for illustrating the flow of the refrigerant during the cooling operation mode of the refrigeration cycle apparatus 100 when discharge temperature is low. In Fig. 3, the cooling operation mode is described taking as an example a case where a cooling load is generated in all the load-side heat exchangers 15. In Fig. 3, the pipes indicated by the thick lines are the pipes through which the refrigerant flows. A direction of the flow of the refrigerant is indicated by the solid arrows.

In the case of the cooling operation mode illustrated in Fig. 3, the refrigerant flow switching device 11 in the outdoor unit 1 is switched so that the refrigerant discharged from the compressor 10 flows into the heat source-side heat exchanger 12. Low-temperature and low-pressure refrigerant is compressed by the compressor 10 and discharged as high-temperature and high-pressure gas refrigerant. The high-temperature and high-pressure gas refrigerant discharged from the compressor 10 flows into the heat source-side heat exchanger 12 through the refrigerant flow switching device 11. Then, after the high-temperature and high-pressure gas refrigerant is condensed and liquefied into high-pressure liquid refrigerant in the heat source-side heat exchanger 12 while rejecting heat to the outdoor air, the high-pressure liquid refrigerant flows out of the outdoor unit 1.

The high-pressure liquid refrigerant flowing out of the outdoor unit 1 passes through the extension pipe 4 to flow into each of the indoor units 2 (2a to 2d). The high-pressure liquid refrigerant flowing into the indoor units 2 (2a to 2d) flows into an expansion devices 16 (16a to 16d) to be expanded and depressurized into low-temperature and low-pressure two-phase refrigerant by the expansion devices 16 (16a to 16d). Further, the refrigerant flows into each of the load-side heat exchangers 15 (15a to 15d) functioning as an evaporator. The refrigerant flowing into the load-side heat exchangers 15 takes away heat from air flowing around the load-side heat exchangers 15 to turn into low-temperature and low-pressure gas refrigerant. Then, the low-temperature and low-pressure gas refrigerant flows out of the indoor units 2 (2a to 2d), and passes through the extension pipe 4 to flow into the outdoor unit 1 again. Then, the refrigerant passes through the refrigerant flow switching device 11, and is then sucked into the compressor 10 again.

At this time, an opening degree (opening area) of each of the expansion devices 16a to 16d is controlled so that a temperature difference (degree of superheat) between a temperature detected by a load-side heat exchanger gas refrigerant temperature detection device 28 and an evaporation temperature transmitted from the controller 60 of the outdoor unit 1 to a controller (not shown) of each of the indoor units 2 approximates a target value.

When the cooling operation mode is executed, the refrigerant is not required to be controlled to flow into the load-side heat exchanger 15 without a heat load (including a thermostat-off state), and hence the operation is stopped. At this time, the expansion device 16 corresponding to the idle indoor unit 2 is fully closed or set at a small opening degree for preventing the flow of refrigerant.

### [Heating Operation Mode]

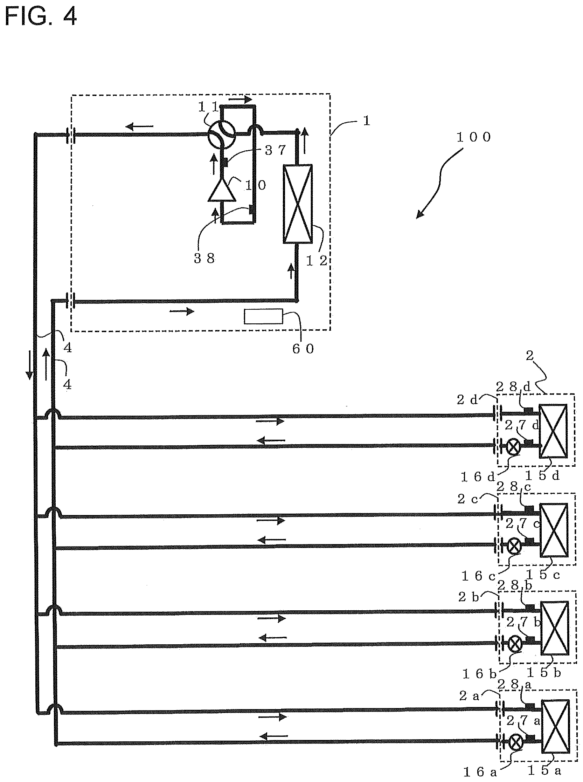

Fig. 4 is a refrigerant circuit diagram for illustrating a flow of refrigerant during the heating operation mode of the refrigeration cycle apparatus 100. In Fig. 4, the heating operation mode is described taking as an example a case where a heating load is generated in all of the load-side heat exchangers 15. In Fig. 4, the pipes indicated by the thick lines are the pipes through which the refrigerant flows, and directions of the flows of refrigerant are indicated by the solid arrows.

In the case of the heating operation mode illustrated in Fig. 4, the refrigerant flow switching device 11 in the outdoor unit 1 is switched so that the refrigerant discharged from the compressor 10 is controlled to flow into the indoor units 2 without passing through the heat source-side heat exchanger 12. Low-temperature and low-pressure refrigerant is compressed into high-temperature and high-pressure gas refrigerant by the compressor 10 to be discharged from the compressor 10. The high-temperature and high-pressure gas refrigerant passes through the refrigerant flow switching device 11 to flow out of the outdoor unit 1. The high-temperature and high-pressure gas refrigerant flowing out of the outdoor unit 1 passes through the extension pipe 4 to flow into each of the indoor units 2 (2a to 2d). The high-temperature and high-pressure gas refrigerant flowing into the indoor units 2 (2a to 2d) flows into each of the load-side heat exchangers 15 (15a to 15d), and is condensed and liquefied into high-temperature and high-pressure liquid refrigerant while rejecting heat to air flowing around the load-side heat exchangers 15 (15a to 15d). The high-temperature and high-pressure liquid refrigerant flowing out of the load-side heat exchangers 15 (15a to 15d) flows into the expansion devices 16 (16a to 16d) to be expanded and depressurized into low-temperature and low-pressure two-phase refrigerant by the expansion devices 16 (16a to 16d), and flows out of the indoor units 2 (2a to 2d). The low-temperature and low-pressure two-phase refrigerant flowing out of the indoor units 2 passes through the extension pipe 4 to flow into the outdoor unit 1 again.

At this time, the opening degree (opening area) of each of the expansion devices 16a to 16d is controlled so that a temperature difference (degree of subcooling) between a condensing temperature transmitted from the controller 60 of the outdoor unit 1 to a controller (not shown) of each of the indoor units 2 and a temperature detected by a load-side heat exchanger liquid refrigerant temperature detection device 27 approximates a target value.

The low-temperature and low-pressure two-phase refrigerant flowing into the outdoor unit 1 flows into the heat source-side heat exchanger 12 and takes away heat from air flowing around the heat source-side heat exchanger 12 to be evaporated into low-temperature and low-pressure gas refrigerant or low-temperature and low-pressure two-phase refrigerant with high quality. The low-temperature and low-pressure gas refrigerant or two-phase refrigerant is sucked into the compressor 10 through the refrigerant flow switching device 11 again.

When the heating operation mode is executed, the refrigerant is not required to be controlled to flow into the load-side heat exchanger 15 without a heat load (including a thermostat-off state). When the expansion device 16 corresponding to the load-side heat exchanger 15 without a heating load is fully closed or is set to a small opening degree for preventing the flow of refrigerant in the heating operation mode, however, the refrigerant is cooled and condensed inside the idle load-side heat exchanger 15 by ambient air so that the refrigerant may stagnate, resulting in shortage of refrigerant in the entire refrigerant circuit. Therefore, during the heating operation, the opening degree (opening area) of the expansion device 16 corresponding to the load-side heat exchanger 15 without a heat load is set to a large opening degree, for example, is fully opened, thereby preventing the stagnation of refrigerant.

Further, a four-way valve is generally used for the refrigerant flow switching device 11. However, the refrigerant flow switching device 11 is not limited thereto. A plurality of two-way passage switching valves or a plurality of three-way passage switching valves may be used so that the refrigerant flows in the same way.

### [Kinds of Refrigerant]

When a substance generally used as the refrigerant, such as R32 or R410A, is used as the refrigerant to be used in the refrigeration cycle apparatus 100, the substance may be used as it is without efforts to improve stability of the refrigerant inside the refrigerant circuit. In this embodiment, however, a substance having such a property as to cause a disproportionation reaction, such as 1,1,2-trifluoroethylene (HFO-1123) represented by C₂H₁F₃ and having one double bond in a molecular structure thereof, or a refrigerant mixture obtained by mixing the substance having such a property as to cause a disproportionation reaction and another substance is used as the refrigerant. For example, a tetrafluoropropene represented by C₃H₂F₄ (such as HFO-1234yf that is 2,3,3,3-tetrafluoropropene represented by CF₃CF=CH₂ or HFO-1234ze that is 1,3,3,3-tetrafluoro-1-propene represented by CF₃CH=CHF) or difluoromethane (HFC-32) represented by a chemical formula CH₂F₂ is used as the substance to be mixed with the substance having such a property as to cause a disproportionation reaction for producing the refrigerant mixture. However, the substance is not limited thereto and HC-290 (propane) or the like may be mixed. Any substance may be used as long as the substance has such thermal performance as to be capable of being used as the refrigerant of a refrigeration cycle apparatus, and any mixing ratio may be adopted.

Here, when some strong energy is applied externally to the substance having such a property as to cause a disproportionation reaction, the adjacent substances may react with each other to turn into a different substance. Therefore, when the substance having such a property as to cause a disproportionation reaction is used as the refrigerant without any countermeasures in the refrigerant circuit, the substance may not only turn into a different substance to fail to function as the refrigerant but also cause an accident, e.g., pipe rupture due to a sudden pressure rise caused by heat generation. The disproportionation reaction is prone to occur particularly in a state in which a distance between the adjacent substances is extremely small, such as in a liquid state or a two-phase state. Even in a gas state, however, the disproportionation reaction may occur when strong energy is applied. Therefore, in order to use the substance having such a property as to cause a disproportionation reaction as the refrigerant, efforts to prevent the disproportionation reaction are required in the refrigerant circuit. Here, energy generated when current flows, energy generated when the refrigerant and a structure collide against each other, or another factor causes the disproportionation reaction of the substance.

### [Compressor 10]

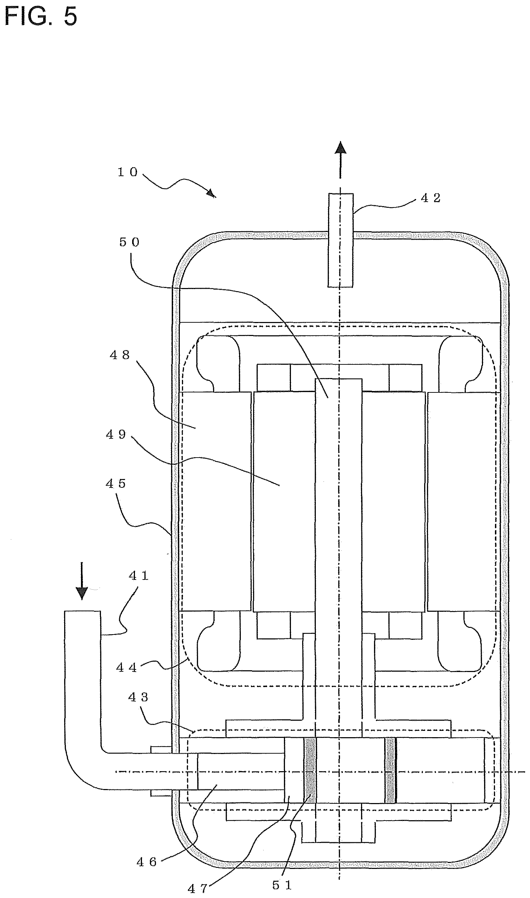

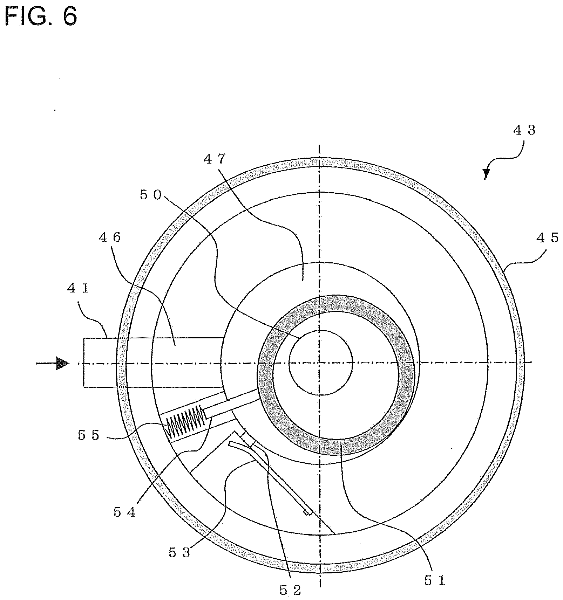

As the compressor 10 according to this embodiment, for example, a fully hermetic high-pressure shell-type rotary compressor is used. A structure and an operation of the rotary compressor are described referring to Fig. 5 and Fig. 6. Fig. 5 is a side sectional view of the compressor 10 as viewed from a side surface thereof. The compressor 10 includes an inflow pipe 41 configured to allow the refrigerant to flow into the compressor 10, an outflow pipe 42 configured to allow the refrigerant to flow out of the compressor 10, a compression unit 43 configured to compress the refrigerant, a motor 44 being a drive source for the compressor 10, and a compressor shell 45 (hereinafter referred to as "shell 45") being a hermetic container configured to cover the compression unit 43 and the motor 44. The motor 44 through which current flows is arranged above the compression unit 43.

The motor 44 includes a stator 48 and a rotor 49. The stator 48 is fixed to the shell 45. Further, the rotor 49 is arranged inside the stator 48 and coupled to a shaft 50.

Fig. 6 is an enlarged view of the compression unit 43 of the compressor 10. The compression unit 43 includes a rolling piston 51. The rolling piston 51 is fixed to the shaft 50 to which the rotor 49 is coupled as well so that rotation of the rotor 49 is transmitted to the rolling piston 51. Here, the rolling piston 51 is eccentrically mounted to the shaft 50.

The refrigerant flows from the inflow pipe 41 into the compressor 10 and then flows into a compression chamber 47 through a suction port 46. The compression chamber 47 has a volume varied by actions of the rolling piston 51 eccentrically mounted to the shaft 50, a vane 54, and a vane spring 55 in accordance with the rotation of the rolling piston 51, thereby compressing the refrigerant flowed thereinto. High-temperature and high-pressure gas refrigerant having increased temperature and pressure as a result of compression is discharged from a discharge valve 53 to flow out of the compression chamber 47 so as to be ejected into the shell 45. At this time, the shell 45 is under a high-pressure refrigerant atmosphere. The high-temperature and high-pressure gas refrigerant inside the shell 45 flows around the motor 44 and flows out of the compressor 10 through the outflow pipe 42.

In the heating operation mode, an evaporation temperature of the refrigerant is low during heating when outside air temperature is low, that is, air temperature around the heat source-side heat exchanger 12 is low. Therefore, when a heated gas is sucked into the compressor 10, a discharge temperature of the compressor 10 is too high. When the discharge temperature of the compressor 10 becomes too high, refrigerating machine oil is deteriorated or performance of the compressor 10 is significantly worsened due to thermal deformation. Therefore, in such a case, the two-phase refrigerant containing the mixture of the gas and the liquid is sucked into the compressor 10, thereby lowering the discharge temperature.

Examples of the kinds of the hermetic compressors include a low-pressure shell-type compressor in addition to the high-pressure shell-type compressor described above. The low-pressure shell-type compressor includes the compression chamber and the motor inside the hermetic container. The refrigerant sucked into the compressor flows into the hermetic container, thereby placing the hermetic container under the low-pressure refrigerant atmosphere. Then, the refrigerant inside the hermetic container is sucked into the compressor to be compressed. After the completion of the compression, the refrigerant is caused to flow out of the compression chamber. The compression unit is arranged in the upper part of the low-pressure shell-type compressor, whereas the motor is arranged in the lower part thereof. In this type of compressor, a liquid component of the two-phase refrigerant flowing into the compressor is separated at the time of flowing into the shell of the compressor before being sucked into the compression chamber, and drops to the lower part of the compressor while colliding against the motor arranged in the lower part of the compression unit. The liquid refrigerant accumulated in the lower part of the shell is stirred by the shaft for oil feeding. There is a fear that the disproportionation reaction of the refrigerant may occur due to the collision between the liquid refrigerant accumulated in the lower part of the shell and the motor or the stir by the shaft.

However, the high-pressure shell-type compressor has the configuration described above. Therefore, even when the two-phase refrigerant containing the mixture of the gas and the liquid is mixed into the compressor 10 in the heating operation mode when the outside air temperature is low or in other modes, the two-phase refrigerant is directly sucked into the compression chamber 47. Then, the two-phase refrigerant does not collide against the structure, e.g., the motor. Further, the high-temperature and high-pressure gas refrigerant is ejected into the shell 45. Therefore, no liquid refrigerant is accumulated in the lower part of the shell 45 and stirred by the shaft 50. Thus, in the compressor 10 formed as the high-pressure shell-type compressor, the disproportionation reaction of the refrigerant is unlikely to occur.

When the two-phase refrigerant is caused to flow into the compressor 10, the two-phase refrigerant having quality equal to or higher than 0.8 and equal to or lower than 0.99 is caused to flow for use in many cases.

In the case of the high-pressure shell-type compressor, the gas refrigerant compressed in the compression chamber 47 to have high temperature is discharged into the shell 45 being a space in which the motor 44 is exposed. The disproportionation reaction of the refrigerant is prone to occur in the liquid state or the two-phase state in which a distance between molecules is short. Further, it is widely known that the disproportionation reaction, which is a chemical reaction, is prone to proceed (a reaction speed is prone to be increased) at high temperature. Therefore, even when the refrigerant is in a gas state, the disproportionation reaction is prone to occur at high temperature. The shell of the high-pressure shell-type compressor is filled with the high-temperature and high-pressure gas refrigerant, and thus, the disproportionation reaction is prone to occur therein. For the occurrence of the disproportionation reaction of the substance in the gas state, however, stronger energy is required than that required in the liquid state or the two-phase state. Therefore, when the temperature of the gas refrigerant discharged from the compression chamber 47 is low in the high-pressure shell-type compressor, the substance in the gas state does not receive collision energy high enough to cause the disproportionation reaction even if the substance collides against the motor 44 inside the shell 45.

As described above, even when the refrigerant is in the gas state, the disproportionation reaction is prone to occur at the high temperature. As the temperature increases, the reaction is more prone to proceed (the reaction speed is prone to increase). In particular, the disproportionation reaction is prone to occur at a temperature equal to or higher than 50 degrees Celsius. In the refrigeration cycle apparatus including the high-pressure shell-type compressor, the temperature of the refrigerant inside the shell 45 of the compressor 10 is equal to or higher than 50 degrees Celsius in most of the cases except in a transient state at the time of activation or other occasions. Therefore, it is desired to introduce countermeasures against the disproportionation reaction as many as possible. The disproportionation reaction is more prone to occur at an increased temperature and is thus further prone to occur at 80 degrees Celsius or higher.

A current flows through the stator 48 and the rotor 49 in the motor 44, and therefore insulation processing is required. If the motor 44 is not insulated, the current disadvantageously flows through the refrigerant around the motor 44 to cause a risk of electric leakage. In addition, if the current flows through the refrigerant containing the substance having such a property as to cause a disproportionation reaction, which is used in this embodiment, there is a fear that the disproportionation reaction may occur due to current energy.

As an insulating material for the motor 44, there is used a substance that is not physically or chemically denatured by the refrigerant even when coming into contact with the high-temperature and high-pressure refrigerant, and has, in particular, solvent resistance, an anti-leaching property, thermal and chemical stability, foaming resistance, and other features. The insulating material for the motor 44 includes an insulating coating material for a winding for the stator 48, an insulating film, an insulating tube, and other materials. A resin material is preferably used as any of the insulating materials.

Specifically, one or more kinds of substances out of polyvinyl formal, polyester, THEIC-modified polyester, polyamide, polyamide imide, polyester imide, and polyester amide imide are each used as the insulating coating material for the winding of the stator 48. In addition, an enamel coating having a glass transition temperature of 120 degrees Celsius or more may be used.

In addition, one or more kinds of substances out of polyethylene terephthalate (PET), polyethylene naphthalate, polyphenylene sulfide (PPS), and polybutylene terephthalate (PBT) are each used as the insulating film for the stator 48. One or more kinds of substances selected from polyether ether ketone (PEEK) and a liquid crystal polymer (LCP) are each used as an insulating material for holding a winding, such as an insulator. An epoxy resin is used as a varnish. Further, one or more kinds of substances selected from polytetrafluoroethylene (PTFE) and a tetrafluoroethylene-hexafluoropropylene copolymer resin (FEP) are each used as the insulating tube for the stator 48.

In the refrigeration cycle apparatus 100 of this embodiment, refrigerating machine oil having a relatively large volume resistivity of, for example, 2×10¹⁰ Ω·m or higher at 20 degrees Celsius, is used as the refrigerating machine oil. When the volume resistivity is large, an amount of current leaking from the motor 44 is relatively small in the compressor 10. Therefore, the disproportionation reaction of the refrigerant is less prone to occur. When miscible refrigerating machine oil is used, the refrigerant and the refrigerating machine oil are mixed with each other inside the shell 45 of the compressor 10 to increase the volume resistivity of the mixture of the refrigerant and the refrigerating machine oil. As a result, the current is unlikely to flow through the refrigerant and the occurrence of the disproportionation reaction is further prevented. Greater effects of suppressing the disproportionation reaction of the refrigerant are obtained when a solubility of the refrigerant to the refrigerating machine oil is increased. In practice, in a case of the refrigerant in a gas state, the disproportionation reaction of the refrigerant in the gas state at high temperature can be sufficiently suppressed when the solubility is equal to or higher than 10 wt% (% by weight). Therefore, in a case where the high-pressure shell-type compressor 10 is used as the compressor 10, the disproportionation reaction of the refrigerant can be sufficiently suppressed when, for example, the solubility of the refrigerant to the refrigerating machine oil is equal to or higher than 10 wt% (% by weight) in a state in which the temperature of the refrigerant inside the shell 45 is 80 degrees Celsius with a pressure which is saturated when the temperature of the refrigerant is 50 degrees Celsius.

As the refrigerating machine oil, any one of polyol ester-based refrigerating machine oil and polyvinyl ether-based refrigerating machine oil is used. Polyol ester and polyvinyl ether are both refrigerating machine oil having a relatively high volume resistivity and miscibility to allow easy dissolution in refrigerant having a single double bond in a molecular structure.

Further, although the case where the compression unit 43 is arranged on the lower side and the motor 44 is arranged on the upper side inside the shell 45 of the compressor 10 is described as an example in this embodiment, the present invention is not limited thereto. The compression unit 43 may be arranged on the upper side and the motor 44 may be arranged on the lower side.

Further, although the case where the compressor 10 is the rotary compressor is described as an example, the compressor is not limited thereto. For example, any high-pressure shell-type compressors including a scroll-type compressor and a screw-type compressor may be used and the same effects are obtained thereby, as long as the refrigerant sucked into the compressor 10 is directly sucked into the compression chamber and is discharged to the hermetic container (shell) after the compression to place the hermetic container under the high-pressure refrigerant atmosphere.

### [Extension Pipes 4]

As described above, the refrigeration cycle apparatus 100 according to this embodiment has some operation modes. In those operation modes, the refrigerant flows through the extension pipes 4 configured to connect the outdoor unit 1 and the indoor units 2 to each other.

Although the high-pressure detection device 37 and the low-pressure detection device 38 are installed so as to control a high pressure and a low pressure in the refrigeration cycle to target values, a temperature detection device configured to detect the saturation temperature may be provided instead.

Further, although the four-way valve is used for the refrigerant flow switching device 11, the refrigerant flow switching device 11 is not limited thereto. A plurality of two-way passage switching valves or a plurality of three-way passage switching valves may be used so that the refrigerant flows in the same way.

Further, the fans are generally mounted on the heat source-side heat exchanger 12 and the load-side heat exchangers 15a to 15d, and the condensation or evaporation is promoted by sending air in many cases, but the present invention is not limited thereto. For example, panel heaters utilizing radiation or other such devices may be used as the load-side heat exchangers 15a to 15d, and a water-cooled device for transferring heat with water or an antifreeze solution may also be used as the heat source-side heat exchanger 12. Any heat exchangers may be used as long as the heat exchangers have a structure capable of rejecting or taking away heat.

Further, although the case where the number of load-side heat exchangers 15a to 15d is four is described as an example, any number of load-side heat exchangers may be connected. In addition, a plurality of the indoor units 1 may be connected to form a single refrigeration cycle.

Further, although the refrigeration cycle apparatus 100 of the type for switching the cooling and the heating in which the indoor units 2 perform any one of the cooling operation and the heating operation is described as an example, the refrigeration cycle apparatus is not limited thereto. For example, the present invention is also applicable to a refrigeration cycle apparatus including the indoor units 2, each capable of arbitrarily selecting any one of the cooling operation and the heating operation, so that a mixed operation with the indoor unit 2 performing the cooling operation and the indoor unit 2 performing the heating operation can be performed as the entire system, and the same effects are obtained thereby.

Further, the present invention is also applicable to an air-conditioning apparatus such as a room air-conditioning apparatus to which only one indoor unit 2 can be connected, a refrigeration apparatus to which a showcase or a unit cooler is connected, and other apparatus. The same effects can be obtained as long as the refrigeration cycle apparatus uses the refrigeration cycle.

Further, the refrigeration cycle apparatus may use plate-type heat exchangers configured to exchange heat with water, an antifreeze solution, or the like as the load-side heat exchangers 15, and may be configured to circulate the water, the antifreeze solution, or the like after the heat exchange through the indoor units so as to supply temperature-controlled air into the space to be air-conditioned.

### Second Embodiment

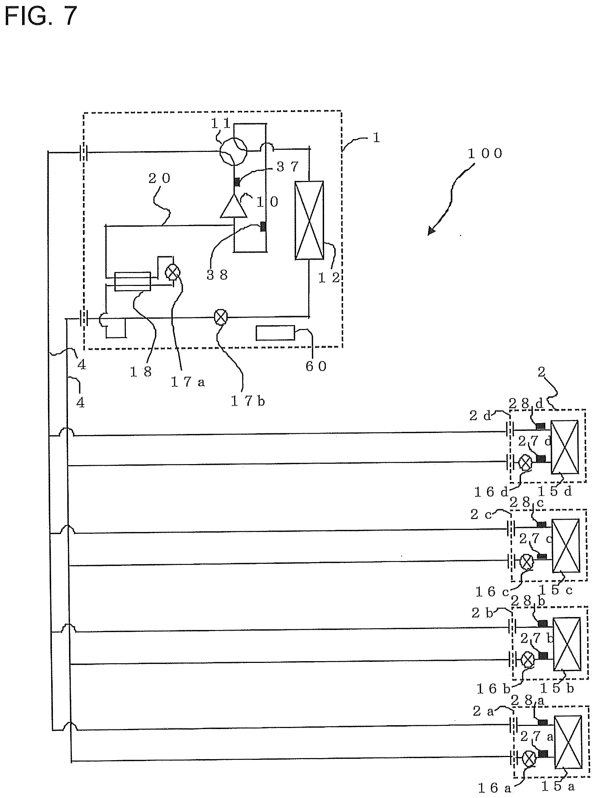

Fig. 7 is a circuit diagram of a refrigeration cycle apparatus according to a second embodiment of the present invention. In this embodiment, the refrigeration cycle apparatus includes an accumulator 19 connected to the compressor 10 on a suction side, configured to accumulate surplus refrigerant therein. Further, the refrigeration cycle apparatus includes a bypass pipe 20 configured to split a part of the refrigerant discharged from the compressor 10 to cause the part of the refrigerant to flow to the suction side of the compressor 10. A bypass expansion device 17a is configured to control the amount of refrigerant passing through the bypass pipe 20. An expansion device 17b is configured to adjust an opening degree thereof to generate an intermediate pressure during the heating operation and is used in a fully open state during the cooling operation. Further, an inter-refrigerant heat exchanger 18 is configured to cause the refrigerator passing through the bypass pipe 20 to exchange heat before and after passage through the bypass expansion device 17a so as to liquefy the refrigerant flowing into the bypass expansion device 17a.

When the accumulator 19 is provided on the suction side of the compressor 10, a liquid component of the two-phase refrigerant is separated in the accumulator 19 so as to be accumulated in the accumulator 19. Therefore, only refrigerant that is slightly wet with high quality is returned from the accumulator 19 to the compressor 10. Therefore, when a discharge temperature of the compressor 10 is lowered in the heating operation mode, for example, the refrigerant flow is split on the lower side of the pipe through which a liquid part passes during the cooling operation (two-phase part during the heating operation) in the refrigerant circuit so that the refrigerant passes through the bypass pipe 20. Then, the refrigerant flowing into the bypass expansion device 17a is cooled in the inter-refrigerant heat exchanger 18 so that the liquid refrigerant reliably flows into the bypass expansion device 17a to be injected into a flow path between the compressor 10 and the accumulator 19. The compressor 10 may be able to suck the refrigerant in the two-phase state in the above-mentioned method.

### Reference Signs List

1 heat source apparatus (outdoor unit) 2a, 2b, 2c, 2d indoor unit 3 heat medium relay unit 4 extension pipe (refrigerant pipe) 4a first connecting pipe 4b second connecting pipe 5 pipe (heat medium pipe) 6 outdoor space 7 indoor space 8 space other than outdoor space or indoor space, e.g., roof space 9 construction ,e.g., building 10 compressor 11 refrigerant flow switching device (four-way valve) 12 heat source-side heat exchanger 15, 15a, 15b, 15c, 15d load-side heat exchanger 16, 16a, 16b, 16c, 16d expansion device 17a bypass expansion device 17b expansion device 18 inter-refrigerant heat exchanger 19 accumulator 20 bypass pipe 27, 27a, 27b, 27c, 27d load-side heat exchanger liquid refrigerant temperature detection device 28, 28a, 28b, 28c, 28d load-side heat exchanger gas refrigerant temperature detection device 37 high-pressure detection device 38 low-pressure detection device 41 inflow pipe 42 outflow pipe
43 compression unit 44 motor 45 shell 46 suction port 47 compression chamber 48 stator 49 rotor 50 shaft 51 rolling piston 52 discharge port 53 discharge valve 54 vane 55 vane spring 60 controller 100 refrigeration cycle apparatus

## Claims

1. A compressor configured to form a part of a refrigerant circuit using refrigerant containing a substance having such a property as to cause a disproportionation reaction, the compressor comprising:
a hermetic container serving as an outer shell;
a compression chamber installed inside the hermetic container, the compression chamber being configured to compress the refrigerant, which is sucked, cause the compressed refrigerant to flow into the hermetic container to place the hermetic container under a high-pressure refrigerant atmosphere, and discharge the compressed refrigerant externally; and
a motor configured to feed power to the compression chamber.

2. The compressor of claim 1, wherein the refrigerant in a two-phase state is sucked.

3. The compressor of claim 2, wherein the refrigerant in the two-phase state is quality of 0.8 or higher and 0.99 or lower.

4. The compressor of any one of claims 1 to 3, wherein an insulating material for the motor comprises a resin material.

5. The compressor of claim 4, wherein one or more substances out of the group of polyvinyl formal, polyester, THEIC-modified polyester, polyamide, polyamide imide, polyester imide, polyester amide imide, polyethylene terephthalate, polyethylene naphthalate, polyphenylene sulfide, polybutylene terephthalate, polyether ether ketone, a liquid crystal polymer, an epoxy resin, polytetrafluoroethylene, and a tetrafluoroethylene- hexafluoropropylene copolymer resin are each used as the insulating material for the motor.

6. The compressor of any one of claims 1 to 5, wherein the compressor has a state in which the compressor causes the refrigerant having a temperature of 50 degrees Celsius or higher to flow out of the compression chamber into the hermetic container.

7. The compressor of any one of claims 1 to 5, wherein the compressor has a state in which the compressor causes the refrigerant having a temperature of 80 degrees Celsius or higher to flow out of the compression chamber into the hermetic container.

8. The compressor of any one of claims 1 to 7, wherein the compressor is filled with refrigerating machine oil having miscibility with the refrigerant.

9. The compressor of claim 8, wherein the refrigerating machine oil contains one of polyol ester and polyvinyl ether as a main component.

10. The compressor of claim 8 or 9, wherein the refrigerating machine oil has a volume resistivity at 20 degrees Celsius of 2×10¹⁰ Ω·m or more.

11. The compressor of any one of claims 8 to 10, wherein the refrigerating machine oil has a solubility in the refrigerant of 10 wt% or more under a state in which a temperature of the refrigerant is 80 degrees Celsius and a pressure of the refrigerant is a saturation pressure at a temperature of the refrigerant of 50 degrees Celsius.

12. The compressor of any one of claims 1 to 11, wherein the refrigerant to be used comprises 1,1,2-trifluoroethylene or a refrigerant mixture containing 1,1,2-trifluoroethylene.

13. A refrigeration cycle apparatus, comprising the compressor of any one of claims 1 to 12, a first heat exchanger, an expansion device, and a second heat exchanger connected by a refrigerant pipe to form a refrigerant circuit.
